(19) Europäisches Patentamt
European Patent Office
Office européen des brevets

(11) **EP 4 575 446 A1**

(12) **EUROPEAN PATENT APPLICATION**

(43) Date of publication:
**25.06.2025 Bulletin 2025/26**

(21) Application number: **24222501.9**

(22) Date of filing: **20.12.2024**

(51) International Patent Classification (IPC):
**G01M 11/00** (2006.01)    **G01B 9/02055** (2022.01)
**G01B 9/10** (2006.01)    **G02B 6/30** (2006.01)
**G02B 6/42** (2006.01)    **G02B 27/62** (2006.01)
**G02F 1/29** (2006.01)    **G01B 11/27** (2006.01)
**G02F 1/21** (2006.01)

(52) Cooperative Patent Classification (CPC):
**G01M 11/331; G01B 9/10; G01B 11/026;**
**G01B 11/0608; G01B 11/272; G02B 6/30;**
**G02B 6/4219; G02B 6/422; G02B 6/4225;**
**G02B 6/4227; G02B 27/62; G02F 1/21;**
**G02F 1/212; G02F 1/29**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.12.2023 US 202363613829 P**

(71) Applicant: EXFO Inc.
**Québec, QC G1M 2K2 (CA)**

(72) Inventors:
• **DUBE-DEMERS, Raphael**
  **Québec, G1M 2K2 (CA)**
• **GERVAIS, Antoine**
  **Québec, G1M 2K2 (CA)**
• **KOCER, Samed**
  **Québec, G1M 2K2 (CA)**

(74) Representative: **Gregory, Alexandra Louise et al**
**Venner Shipley LLP**
**5 Stirling House**
**Surrey Research Park**
**Stirling Road**
**Guildford GU2 7XH (GB)**

(54) **POSITIONING AN OPTICAL WAVEGUIDE TO A PHOTONIC INTEGRATED CIRCUIT**

(57) There is provided a photonic integrated apparatus for determining an orientation and/or a position of an optical waveguide, by measuring a relative intensity and a relative phase difference of the probe light signal incident on a sensor array. The phase profile of the probe light signal projected spatially on the sensor array is particularly sensitive to small changes in the optical probe's orientation and distance. The apparatus measures the relative intensity and relative phase difference of the probe light signal incident on a sensor array. A photonic integrated sensor circuit comprises the sensor array and one or more optical interferometric circuits. Changes in the sensed relative intensity and relative phase difference of the probe light signal, as sampled by the sensor array, indicate variations in the relative orientation and/or distance between the optical waveguide and the sensor array.

Fig. 3

EP 4 575 446 A1

**Description**

TECHNICAL FIELD

The present description generally relates to Photonic Integrated Circuit (PIC) testing and assembly, and more particularly to precision positioning of optical fibers or other waveguides or optical probes relative to a PIC.

BACKGROUND

Testing and characterizing Photonic Integrated Circuits (PICs) involves various measurements including optical, electrical, and optoelectronic. Optical probes play a crucial role in coupling light into and out of PICs, demanding high positioning precision for optimal efficiency, performance, accuracy and/or repeatability.

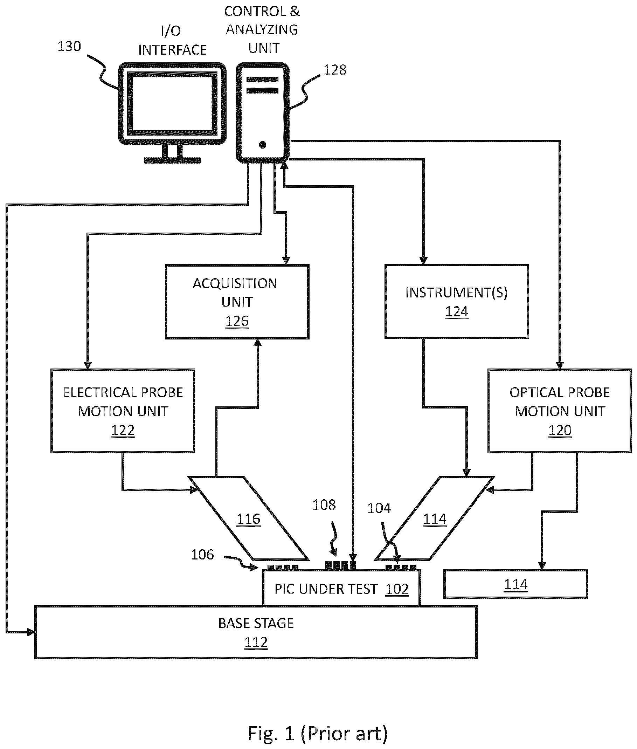

Referring to Fig. 1 (Prior art), test stations are generally equipped with a base stage 112, designed for the placement of a wafer, a die or a reticle comprising the PIC 102 to be tested. The base stage 112 is typically motorized and offers precise positioning along X, Y, Z axes as well as rotation Rz about the z-axis. Test probes 114, 116 are used to transmit signals to the PIC under test, which probes may include electrical probes 116 (such as direct current and radio frequency probes) and optical probes 114.

Optical and electrical probes 114, 116 are typically mounted on motorized motion units 120, 122. The optical probe motion unit 120 generally features variable degrees of freedom, resulting in motion in space of up to 6 dimensions, i.e. X, Y, Z axes and rotations Rx, Ry, Rz about the X, Y, Z axes, respectively.

An inherent challenge lies in positioning the optical probe 114 relative to the PIC 102 to be tested. This applies especially to the distance between the PIC 102 and the optical probe 114, as well as the optical probe orientation (i.e., Rx and Ry). The industry traditionally uses an optical probe motion unit 120 in order to position the optical probe 114 in proximity of the PIC's optical input/output ports, that can be located at the die surface (surface coupling) or facet (edge coupling). The probe distance and angular (orientation) positioning may thereafter be coarsely adjusted in a calibration step. This process offers little room for further fine-tuning. This results in inconsistent measurements and a higher degree of uncertainty, diminishing both the repeatability and accuracy of tests.

PIC optical packaging also faces similar challenges. Packaging a PIC for use in the industry may require positioning of optical fibers or other optical waveguides relative to the PIC, or positioning one or more PICs relative to one another. Once carefully positioned, the PIC(s) and the optical fibers or other waveguides are permanently affixed in the PIC's packaging. Imprecise and/or inconsistent positioning may result in non-optimal coupling efficiency, thereby affecting PIC's performance, accuracy and/or manufacturing repeatability.

Some positioning methods in the prior art includes machine vision, optical power monitoring and position sensors.

Machine vision systems use cameras to capture images of alignment marks - fiducials with high contrast patterns - on both the optical probe and photonic chip. By analyzing the relative positions of the alignment marks in the images, the system can calculate the displacement between the probe and chip. This image-based measurement is limited to a precision of a few microns due to diffraction-limited optical resolution.

In optical power monitoring methods, the optical probe is hooked up to a photodetector to monitor power transmission between the probe and on-chip waveguides. As the probe position is adjusted, the coupling efficiency changes, causing fluctuations in transmitted power. The system finds the position of the probe which maximizes optical power by minimizing coupling loss between the probe and waveguides. However, the optical signal saturates as alignment precision approaches 400-500 nm (see, e.g., Latkowski et al., "Open standards for automation of testing of photonic integrated circuits," IEEE Journal of Selected Topics in Quantum Electronics, vol. 25, no. 5, pp. 1-8, 2019.).

With external sensors, magnetic or capacitive sensors are integrated into the positioning stages near the probe and chip. By triangulating the electrical/magnetic fields emitted from the probe tip, the relative displacement can be estimated. These sensors are well-suited for micron scale motions but lack the sensitivity for nanometer precision alignment (see, e.g., positioning sensors by Hamamatsu Photonics, Keyence and ams).

Reflective laser sensors use a laser beam pointed at the target surface to measure displacement and position. The laser beam reflects off the target and is captured by a position sensitive detector that determines nanometer-scale changes in the reflected beam angle and intensity. Reflective laser sensors can achieve high accuracy, stability, and speed for alignment applications. However, they still face limitations in drift compensation and angular alignment (see, e.g., positioning sensors by Hamamatsu Photonics).

None of the above methods is adapted to provide feedback regarding the orientation of the optical probe. There therefore remains a need for precision positioning of optical probes relative to a PIC for either testing or optical packaging.

## SUMMARY

In the pursuit of accuracy in photonic testing and/or reliable packaging, there is proposed a solution for precision optical probe positioning, which is based on a reference Photonic Integrated Sensor Circuit (PISC).

There is provided a photonic integrated apparatus for determining an orientation and/or a position of an optical waveguide, by measuring a relative intensity and a relative phase difference of the probe light signal incident on a sensor array. The phase profile of the probe light signal projected spatially on the PISC sensor array is particularly sensitive to small changes in the optical probe's orientation and distance. The apparatus measures the relative intensity and relative phase difference of the probe light signal incident on a sensor array. A photonic integrated sensor circuit comprises the sensor array and one or more optical interferometric circuits. Changes in the sensed relative intensity and relative phase difference of the probe light signal, as sampled by the sensor array, indicate variations in the relative orientation and/or distance between the optical waveguide and the PISC sensor array.

Results have demonstrated that nanometer-scale shifts in the relative orientation can be detected by monitoring phase changes in the probe light beam once projected to the sensor array. Minute variations in angular orientation are therefore observable through quantifiable phase profile modifications as read by the sensor array. Photonic integrated sensing can therefore achieve unprecedented probe positioning resolution for PIC testing, probing and characterization, far beyond the limits of other existing techniques.

In accordance with one aspect, there is provided an apparatus for determining an orientation of an optical waveguide carrying a probe light signal, relative to a target photonic integrated circuit, the apparatus comprising:

a photonic integrated sensor circuit comprising:

a sensor array comprising a first optical input coupler and a second optical input coupler to capture respective first sample signal and second sample signal of said probe light signal propagating in free-space from an output of said optical waveguide to said first and second optical input couplers, and

a first optical interferometric circuit receiving said first and second sample signals of the probe light signal and generating a first set of interference signals; and

a first set of photodetectors receiving said first set of interference signals to generate electrical detection signals representative of: a) a relative intensity between said first and said second sample signals of the probe light signal as coupled to the first and second optical input couplers; and b) a relative phase difference between said first and said second sample signals of the probe light signal as sampled by the first and second optical input couplers.

In accordance with another aspect, there is provided a method for determining an orientation of an optical waveguide carrying a probe light signal, relative to a photonic integrated circuit, the method comprising:
positioning the optical waveguide in proximity to a photonic integrated sensor circuit comprising:

a sensor array comprising a first optical input coupler and a second optical input coupler to capture respective first sample signal and second sample signal of said probe light signal propagating in free-space from an output of said optical waveguide to said first and second optical input couplers, and

a first optical interferometric detection circuit receiving said first and second sample signals of the probe light signal and generating electrical detection signals representative of a relative intensity and a relative phase difference between said first and said second sample signals of the probe light signal as sampled by the first and second optical input couplers;

using the photonic integrated sensor circuit, measuring a relative phase difference of the probe light signal as sampled by the first and second optical input couplers of the photonic integrated sensor circuit; and

determining said orientation of the optical waveguide about a first axis from the measured relative phase difference.

In some implementations, a displacement of the optical probe relative to the target photonic integrated circuit is calculated at least from the determined orientation of the optical probe and a predetermined reference position and orientation of the photonic integrated sensor circuit relative to the target photonic integrated circuit; and the optical probe is moved to a target orientation relative to the target photonic integrated circuit according to the calculated displacement.

In some implementations, said first and second optical input coupler may be positioned spaced apart from one another along a second axis and said photonic integrated sensor circuit may further comprise a third optical input coupler to capture a third sample of said probe light signal and positioned spaced apart from said second optical input coupler along a first axis perpendicular to said second axis.

The measured intensities and phase differences may then be used to determine said orientation of the optical probe about said first rotation axis and a second rotation axis.

In some implementations, said photonic integrated sensor circuit further may comprise: a second optical interferometric circuit receiving said second and third sample signals and generating a second set of interference signals; and a second set of photodetectors receiving said second set of interference signals to generate electrical detection signals representative of: a) a third intensity of the probe light signal as coupled to the third optical input coupler of the photonic integrated sensor circuit; and b) a phase difference of the probe light signal as sampled by the second and third optical input couplers of the photonic integrated sensor circuit.

The photonic integrated sensor circuit may then be used to measure a third intensity of the probe light signal as coupled to the third optical input coupler of the photonic integrated sensor circuit; measure a phase difference of the probe light signal as sampled by the second and third optical input couplers of the photonic integrated sensor circuit; and determine an orientation of the optical probe about a second rotation axis using the measured intensities and phase differences.

In some implementations, said photonic integrated sensor circuit may comprise a two-dimensional matrix of optical input couplers comprising said first, second and third optical input couplers. Said photonic integrated sensor circuit may further comprise a plurality of optical interferometric circuits generating respective sets of interference signals from said matrix of optical input couplers; and a corresponding plurality of sets of photodetectors receiving said sets of interference signals to generate electrical detection signals.

In some implementations, the optical interferometric circuit(s) may comprise a 90-degree optical hybrid circuit.

In some implementations, a first set of photodetectors may comprise four photodetectors receiving respective four interference signals from the 90-degree optical hybrid circuit.

In some implementations, the apparatus may further comprise a balancing stage to equalize an optical power of the first and second sample signals from one another at an input of the first optical interferometric circuit.

In some implementations, the apparatus may further comprise: an analog-to-digital converter to convert the electrical detection signals from analog to digital interference signals in order to allow processing; and a processing unit receiving the digital interference signals and configured for determining said orientation of the optical waveguide about a rotation axis from said digital interference signals. The processing unit may also be configured for determining a distance of the optical waveguide relative to the photonic integrated sensor circuit using measured relative intensity and relative phase difference.

In some implementations, said optical waveguide may be part of an optical probe for testing said target photonic integrated circuit.

In some implementations, said photonic integrated sensor circuit and said target photonic integrated circuit may be part of a same wafer, a position and orientation of the target photonic integrated circuit relative to the photonic integrated sensor circuit being known by design. Said photonic integrated sensor circuit and said target photonic integrated circuit may further be part of a same die.

In some implementations, using the photonic integrated sensor circuit, a relative intensity between said first and said second sample signals of the probe light signal as coupled to the first and second optical input couplers may be measured; and the optical waveguide positioned in proximity to a photonic integrated sensor circuit such that a propagation axis of the optical waveguide is substantially aligned to a point of origin defined on said sensor array using feedback from the measured relative intensity between said first and said second sample signals.

In some implementations, a distance of the optical waveguide relative to the photonic integrated sensor circuit may be determined using the measured relative intensity and relative phase difference.

In accordance with yet another aspect, there is provided a method for positioning an optical probe to be used for providing a probe light signal, relative to a target photonic integrated circuit to be tested, the method comprising:

positioning the optical probe in proximity to a photonic integrated sensor circuit comprising:

a first and a second optical input coupler to capture respective first and second sample signals of said probe light signal propagating in free-space, and

a first optical interferometric detection circuit receiving said first and second sample signals and generating electrical detection signals representative of an intensity and relative phase difference of the of the probe light signal as sampled by the optical input couplers;

using the photonic integrated sensor circuit, measuring a first and a second intensity of the probe light signal as coupled to the first and second optical input couplers of the photonic integrated sensor circuit, respectively;

using the photonic integrated sensor circuit, measuring a relative phase difference of the probe light signal as sampled by the optical input couplers of the photonic integrated sensor circuit;

determining an orientation of the optical probe about a first axis using measured intensities and relative phase differences; and

using one or more motion units, moving the optical probe to a target orientation relative to the target photonic integrated circuit as a function of the determined orientation.

In some implementations, the method further comprises calculating a displacement of the optical probe toward to the target photonic integrated circuit at least from the determined orientation of the optical probe and a predetermined position and orientation of the photonic integrated sensor circuit relative to the target photonic integrated circuit; and moving the optical probe to a target orientation relative to the target photonic integrated circuit according to the calculated displacement.

In some implementations, the method further comprises measuring said predetermined position and orientation of the target photonic integrated circuit relative to the photonic integrated sensor circuit.

In some implementations, wherein said predetermined position and orientation of the target photonic integrated circuit relative to the photonic integrated sensor circuit is measured using machine vision.

In this specification, unless otherwise mentioned, word modifiers such as "substantially" and "about" which modify a value, condition, relationship or characteristic of a feature or features of an embodiment, should be understood to mean that the value, condition, relationship or characteristic is defined to within tolerances that are acceptable for proper operation of this embodiment in the context its intended application. In particular, the term "about" generally refers to a range of numbers that one skilled in the art would consider equivalent to the stated value (e.g., having the same or an equivalent function or result). In some instances, the term "about" may mean a variation of $\pm 10\%$ of the stated value. It is noted that all numeric values used herein are assumed to be modified by the term "about", and that all conditions, relationships or characteristics used herein are assumed to be modified by the term "substantially", unless stated otherwise. The term "between" is used herein to refer to a range of numbers or values defined by endpoints is intended to include both endpoints, unless stated otherwise.

In the present description, the terms "light" and "optical" are used to refer to radiation in any appropriate region of the electromagnetic spectrum. More particularly, the terms "light" and "optical" are not limited to visible light, but can include, for example, the infrared or ultraviolet wavelength ranges.

Further features and advantages of the present invention will become apparent to those of ordinary skill in the art upon reading of the following description, taken in conjunction with the appended drawings.

The following description is provided to gain a comprehensive understanding of the methods, apparatus and/or systems described herein. Various changes, modifications, and equivalents of the methods, apparatuses and/or systems described herein will suggest themselves to those of ordinary skill in the art. Description of well-known functions and structures may be omitted to enhance clarity and conciseness.

Although some features may be described with respect to individual exemplary embodiments, aspects need not be limited thereto such that features from one or more exemplary embodiments may be combinable with other features from one or more exemplary embodiments.

BRIEF DESCRIPTION OF THE DRAWINGS

Fig. 1 (Prior art) is a block diagram illustrating a test station for testing Photonic Integrated Circuits (PIC).

Fig. 2 is a schematic illustrating an optical probe positioned to probe a PIC via on-chip optical couplers.

Fig. 3 is a block diagram illustrating a test station for testing a PIC comprising a Photonic Integrated Sensor Circuit (PISC) for referencing an orientation and/or a position of an optical probe, in accordance with one embodiment.

Fig. 4 is a schematic illustrating an optical waveguide positioned relative to optical input couplers of a PISC for referencing an orientation of the optical waveguide, in accordance with one embodiment comprising a minimum of two input couplers.

Fig. 5 is a schematic illustrating an optical waveguide positioned relative to optical input couplers of a PISC for referencing an orientation of the optical waveguide, in accordance with another embodiment comprising a two-dimensional matrix of input couplers.

Fig. 6 is a schematic illustrating a PISC as manufactured on a chip and comprising a sensor array, an interferometric detection circuit and electrical couplers, in accordance with one embodiment.

Fig. 7 is a block diagram illustrating an apparatus for determining an orientation and/or position of an optical waveguide and comprising the PISC of Fig. 6, in accordance with one embodiment.

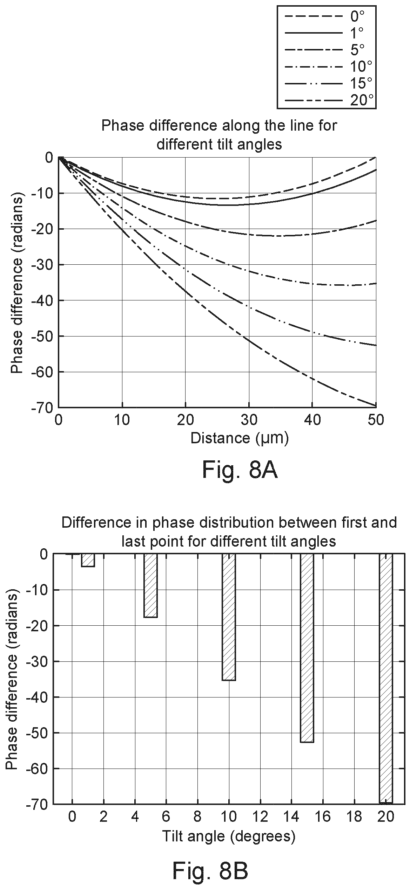

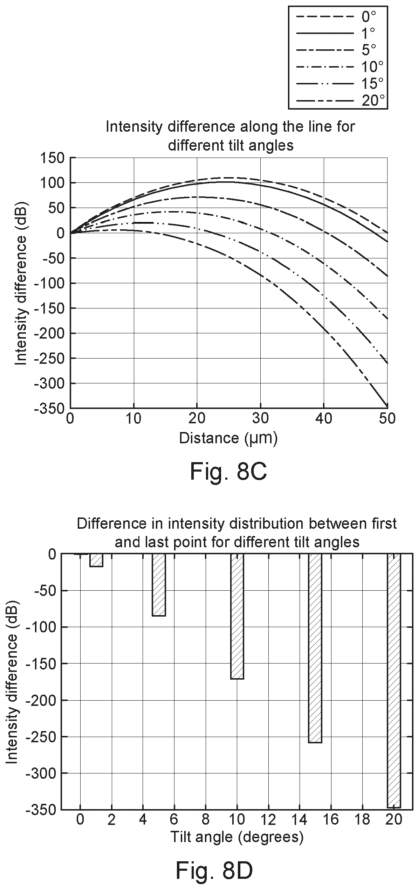

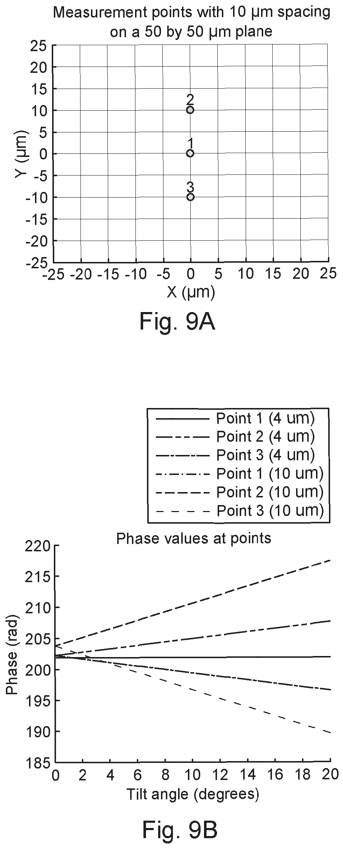

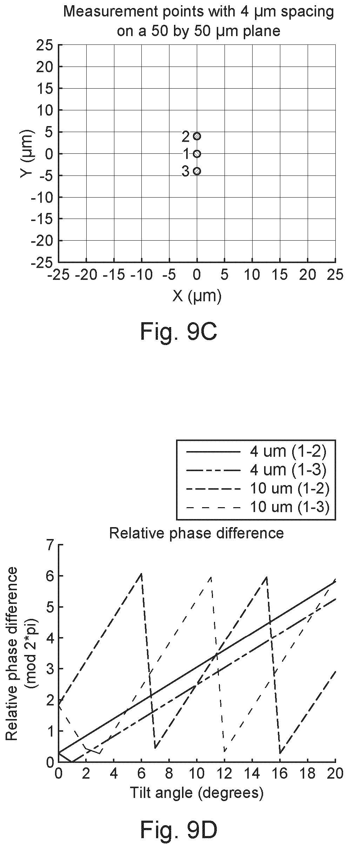

Fig. 8 shows simulations results illustrating variations in phase and intensity of the probe light signal incident on a sensor array, along x = 0, and comprises Fig. 8 a), Fig. 8 b), Fig. 8 c) and Fig. 8 d), wherein Fig. 8 a) is a graph showing the phase difference as a function of a distance along x = 0; Fig. 8 b) is a bar graph showing the phase difference between the first and last distance point of Fig. 8 a) for various tilt angles; Fig. 8 c) is a graph showing the intensity difference as a function of a distance along x = 0; and Fig. 9 d) is a bar graph showing the intensity difference between the first and last distance point of Fig. 8 c) for various tilt angles.

Fig. 9 shows simulations results illustrating variations in relative phase difference between two input couplers for various spacings therebetween and comprises Fig. 9 a), Fig. 9 b), Fig. 9 c) and Fig. 9 d), wherein Fig. 9 a) is a graph illustrating positions of input couplers on a 50 $\mu$m by 50 $\mu$m plane for a spacing of 4 $\mu$m; Fig. 9 b) is a graph showing the phase corresponding to each input coupler for various tilt angles; Fig. 9 c) is a graph illustrating positions of input couplers on a 50 $\mu$m by 50 $\mu$m plane for a spacing of 10 $\mu$m; and Fig. 9 d) is a graph showing the relative phase difference corresponding to pairs of input couplers for various tilt angles.

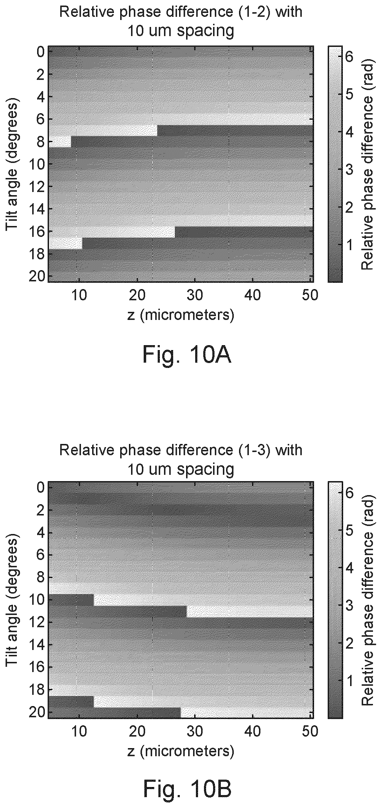

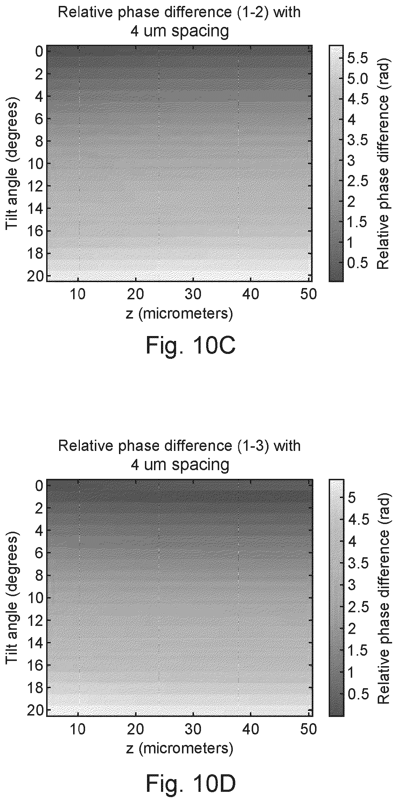

Fig. 10 shows simulations results illustrating how the distance in z and tilt angles impact the relative phase differences in input couplers spaced of 10 $\mu$m and 4 $\mu$m and comprises Fig. 10 a), Fig. 10 b), Fig. 10 c) and Fig. 10 d), wherein Fig. 10 a) is heat map graph showing the relative phase difference observed between input couplers 1 and 2 having a spacing of 10 $\mu$m; Fig. 10 b) is heat map graph showing the relative phase difference observed between input couplers 1 and 3 having a spacing of 10 $\mu$m; Fig. 10 c) is heat map graph showing the relative phase difference observed between input couplers 1 and 2 having a spacing of 4 $\mu$m; and Fig. 10 c) is heat map graph showing the relative phase difference observed between input couplers 1 and 3 having a spacing of 4 $\mu$m.

Fig. 11 is a block diagram illustrating an example architecture of a computer system embodying the control and analyzing unit used in the test station of Fig. 1, in accordance with one embodiment.

It will be noted that throughout the drawings, like features are identified by like reference numerals. In the following description, similar features in the drawings have been given similar reference numerals and, to not unduly encumber the figures, some elements may not be indicated on some figures if they were already identified in a preceding figure. It should be understood herein that elements of the drawings are not necessarily depicted to scale, since emphasis is placed upon clearly illustrating the elements and structures of the present embodiments. Some mechanical or other physical components may also be omitted in order to not encumber the figures.

DETAILED DESCRIPTION

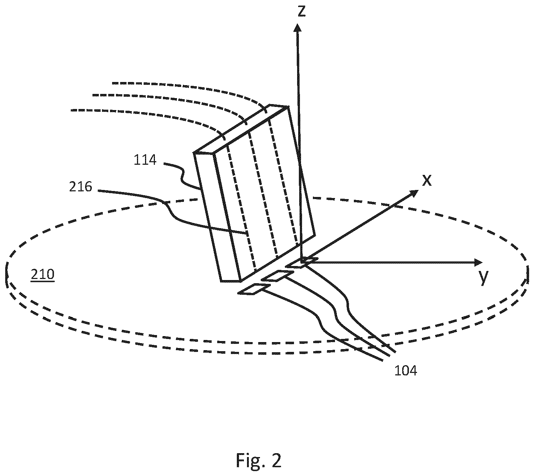

Fig. 2 schematically illustrates an optical probe 114 positioned to probe a Photonic Integrated Circuits (PICs) 210 via on-chip optical couplers 104, by coupling test light into the PIC via the optical couplers 104. The optical probe 114 as shown comprises one or more optical waveguides 216, herein three, each carrying a probe light signal to be coupled via a respective optical input coupler 104 (hereinafter referred to more concisely as "input coupler").

In the context of PIC testing, the incidence pitch angle (Rx in Fig. 2) is the specific angle at which probe light beam is directed to the circuit input couplers. This angle is important as it impacts various optical phenomena, including reflection, refraction, and the efficiency of light coupling into optical input and output couplers including surface couplers and edge couplers. The choice of the incidence angle, whether through surface or edge coupling, exerts a significant impact on coupling efficiency.

Efficient coupling is critical because it ensures that the precise amount of light energy interacts with the photonic circuit, enabling the acquisition of accurate and repeatable measurements. Misalignment or incorrect incidence angles can result in coupling losses, ultimately leading to diminished signal strength, reduced signal-to-noise ratios, and compromised measurement accuracy. The control of these parameters enables the evaluation of issues such as signal loss, interference, and the overall efficacy of the photonic pathways within the integrated circuit. In some embodiments, light may be coupled into the chip using an incident angle of approximately 10 degrees, for example. Furthermore, it is important to note that the distance between the optical probe and the wafer/die also significantly affects coupling efficiency.

For example, the probe may be positioned 40-60 um from the input couplers for better coupling.

The industry traditionally uses an optical probe motion unit 120 (see Fig. 1) comprising motorized stages to position the optical probe 114 in proximity of the PIC surface (surface coupling) or facet (edge coupling). The probe distance and angular (orientation) positioning may thereafter be coarsely adjusted in a calibration step. However, this calibration offers little room for further fine-tuning. The position and orientation at which the optical probe 114 is positioned relative to the PIC 210 significantly impacts the coupling efficiency and imprecise positioning results in inconsistent measurements and a higher degree of uncertainty, diminishing both the repeatability and accuracy of tests.

It is noted that while Fig. 2 depicts a surface coupling configuration, the methods and apparatus herein proposed are equally applicable for edge coupling configurations and can be applied to chips and other PIC formats. Optical couplers, while they can be implemented as surface grating couplers, can also be implemented as simple inverter taper tips in edge coupling configurations, up to complex multi-layer, multi-waveguide formats.

In order to improve the positioning precision of optical waveguides relative to a PIC for either PIC testing or optical packaging, there is proposed a solution for precision optical waveguide positioning, which is based on a reference Photonic Integrated Sensor Circuit (PISC). The present description refers mostly positioning an optical probe (comprising one or more optical waveguides) relative to a PIC to be tested, but it will be understood that the described methods and apparatuses can be easily adapted to generally positioning optical waveguides relative to a PIC, for optical packaging applications for example.

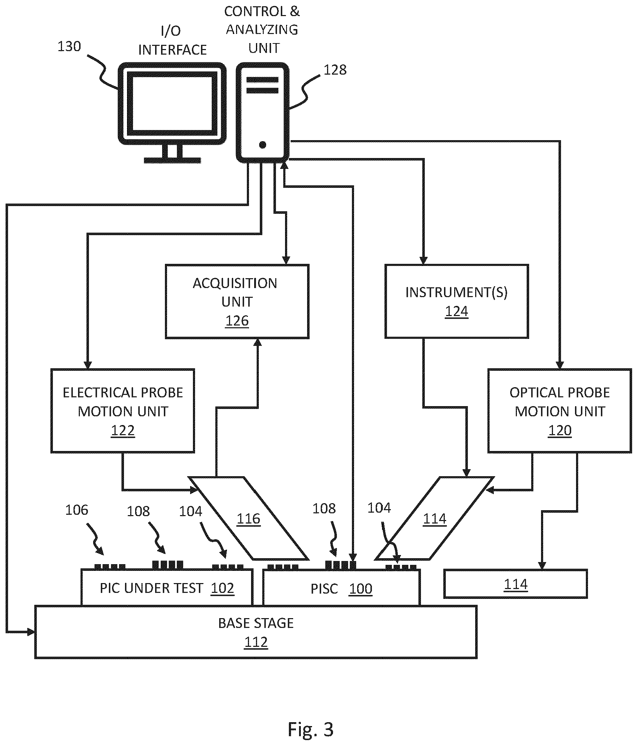

Fig. 3 illustrates a test station for testing a PIC 102 comprising a Photonic Integrated Sensor Circuit (PISC) 100 for referencing an orientation and/or a position of an optical probe. Test stations are generally equipped with a base stage 112, designed for the placement of a wafer, a die or a reticle comprising the PIC 102 to be tested. The base stage 112 is typically motorized and offers precise positioning along X, Y, Z axes as well as rotation on its surface (about the z-axis) using high-precision motors. Test probes 114, 116 are used to transmit signals to the PIC under test, which probes may include electrical probes 116 (such as direct current and radio frequency probes) and optical probes 114. Optical probes 114 are used to couple probe light signals into the PIC 102 via the optical couplers 104, whereas electrical probes 116 are used to couple electrical signal in or out of the PIC via the electrical couplers 106, in a temporary manner for testing. In some cases, the PIC 102 may be part of a wafer or a die comprising multiple of such PIC 102 to be tested. In order to position the optical and electrical probes 114, 116 on various PICs or various optical or electrical couplers 104, 106 of the PIC 102, the optical and electrical probes 114, 116 are typically mounted on motorized motion units 120, 122. The optical probe motion unit 120 generally features variable degrees of freedom, resulting in motion in space of up to 6 dimensions, i.e. X, Y, Z axis and rotations Rx, Ry, Rz about the X, Y, Z axes, respectively. The PIC 102 to be tested and/or the PISC 100 may further comprise electrical contacts 108 for injecting in or reading signals out of the PIC 102 via a more permanent connection.

The test station further typically comprises optical instruments 124 such as laser source(s), optical power meter(s), optical switch(es), optical spectrum analyzer(s), etc., as well as an acquisition unit 126 to read the probed electrical signals and comprising an analog-to-digital converter to convert the electrical signals from analog to digital signals in order to allow processing. The test station then further typically comprises a control and analyzing unit 128 comprising a processing unit running a software to control the motion of the base stage 112 and probe motion units 120, 122 as well as the instrument(s) 124 for testing the PIC 102, as well as I/O interface 130 for interfacing with a user of the test station.

In Fig. 3, the PISC 100 is used to reference the positioning of the optical probe 114 relative to the PIC 102 for PIC testing. In some embodiments, the PISC 100 and the PIC 102 may be part of a same wafer, a position and orientation of the PIC 102 relative to the PISC 100 may then be known by design. In other embodiments, the PISC 100 and the PIC 102 may further be part of a same die. In yet other embodiments, the PISC 100 may be manufactured on a separate die and may simply be mounted over the base stage in a fixed position and orientation relative to the PIC102, the said position and orientation being either known by design or determined by measurement using, e.g., machine vision or other sensors.

Using the optical probe motion unit 120, the optical probe 114 can be moved to either the PIC 102 or the PISC 100 in alternance. The idea is to determine the position and/or orientation of the optical probe 114 in space using the PISC 100 to then move the optical probe 114 to a target position and/or orientation relative to the target PIC 102 as a function of the determined orientation. For example, once the position and/or orientation of the optical probe 114 relative to the PISC 100 is determined, a displacement of the optical probe 114 toward the target PIC 102 may be calculated at least from the determined position and/or orientation of the optical probe 114 and a predetermined position and/or orientation of the PISC 100 relative to the target PIC 102. The optical probe 114 may then be moved to a target orientation relative to the target PIC 102 according to the calculated displacement.

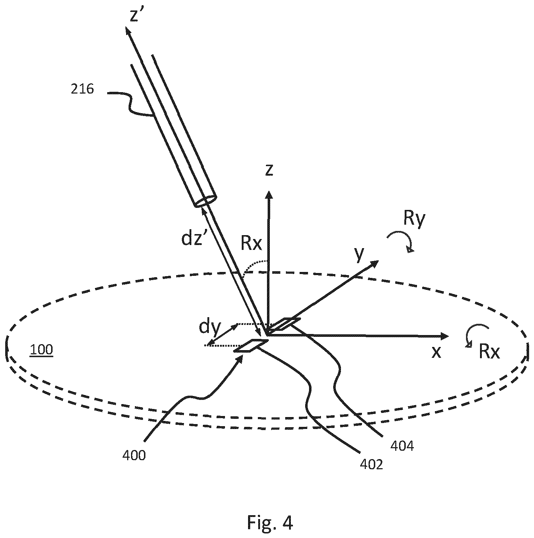

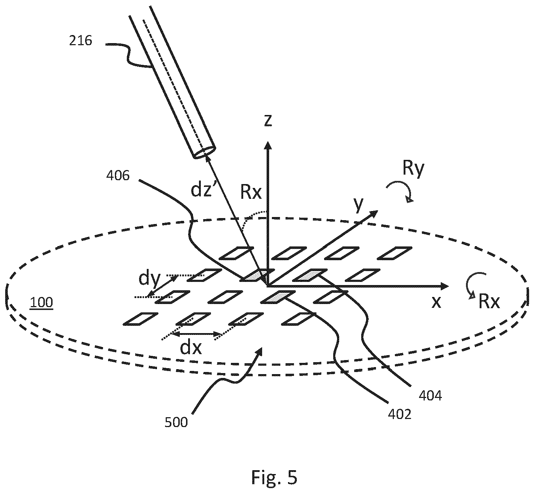

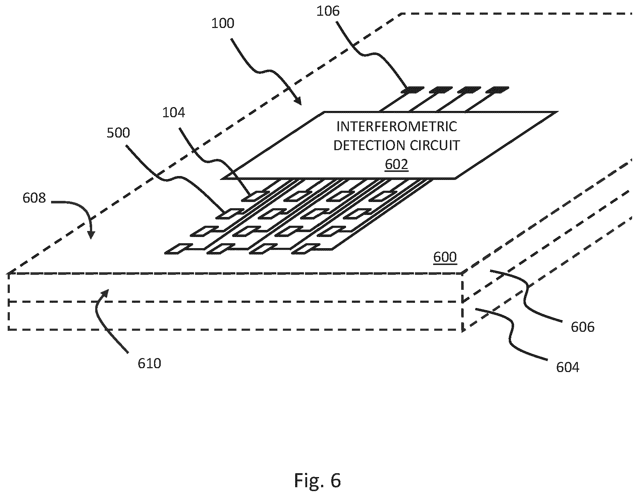

Referring to Figs. 4 and 5, the PISC 100 of Fig. 3 comprises a sensor array 400, 500 designed to serve as a stable reference for quantifying nanoscale variations in the orientation (Rx, Ry, Rz) (i.e., incident angle) and/or position (x, y, z) of an optical waveguide 216 relative to the PISC 100. The approach involves the use of an on-chip sensor array 400, 500 and interferometric detection circuit 602 (see Fig. 6) that resolves the intensity and wavefront of an incoming light beam emanating from the optical waveguide 216, roughly within the Rayleigh range. Therefore, the PISC 100 is used to measure alterations in the phase and intensity of the probe light signal as it is coupled to the chip in a 1D or 2D sensor array 400, 500, particularly in response to changes in the relative position between the probe and the substrate. Even minute adjustments in separation distance dz' (along the z'-axis) or angular alignment (Rx, Ry, Rz) between the probe and the reference PIC result in measurable changes in the relative phase and/or relative intensity. This is especially true for the phase response which provides the most critical information.

Also, it may be convenient to define the position of the optical probe 114 or optical waveguide 216 by its distance dz' relative to a point of origin defined on the sensor array 400, 500, as defined along an axis z' coincident with the propagation axis of the optical waveguide 216. In practice, a method for determining an orientation of the optical waveguide 216 relative to a PIC may comprise a first step of positioning the optical waveguide 216 in proximity to a PISC 100 such that the propagation axis of the optical waveguide 216 is substantially aligned to a point of origin defined on the sensor array 400, 500. This alignment may be achieved using feedback from a measured relative intensity of the probe light signal as captured by the input couplers 402. For example, in a simplistic embodiment wherein the angle in Rx is considered null, the optical waveguide 216 may be aligned to a point of origin located on a mid-point between the two input couplers 402 of the sensor array 400 of Fig. 4, by moving the optical waveguide 216 until the measured relative intensity between the two input couplers 402 is found to be substantially null.

It is noted that in practice, the optical waveguide 216 may form part of an optical probe 114 as shown in Fig. 3.

Fig. 4 shows an embodiment wherein the sensor array 400 comprises a minimum of two input couplers 402, wherein the input couplers are positioned spaced apart from one another along the y axis, with a distance dy therebetween. Such embodiment can be used to reference an orientation Rx of the optical waveguide 216 about the x axis only. The input couplers 402 are used to capture respective first sample signal and second sample signal of the probe light signal propagating in free-space from the output of the optical waveguide 216 to the input couplers 402. The signals then undergo a processing through the interferometric detection circuit 602 to resolve a relative intensity and relative phase difference of the captured sample signals.

The number of input couplers 402 may be increased to form, e.g., a one-dimensional (1D) sensor array of input couplers 402, thereby creating additional distances 2*dx, 3*dx, etc. between pairs of input couplers. Such plurality of pairs of input couplers enables different sensitivities and different ranges due to the different spacing, i.e. 1-2 vs 1-3 for instance, and may improve the resilience of the method.

Referring to Fig. 5, in order to resolve the orientation (Rx, Ry) of the optical waveguide 216 along both the x and the y axes, the sensor array may comprise a minimum of three input couplers 402. In such case, a third input coupler 406 may be used to capture a third sample signal of the probe light signal and be positioned spaced apart from the input coupler 404 along the x axis, i.e. perpendicular to the y axis, with a distance dx therebetween. Such embodiment can be used to reference an orientation Rx, Ry of the optical waveguide 216 about both the x and the y axes.

The number of input couplers may be increased as desired to form, e.g., a two-dimensional matrix of input couplers 402, thereby creating additional distances 2*dx, 3*dx, 2*dy, 3*dy, etc. between pairs of input couplers. These additional distances may provide additional relative intensity and relative phase difference measurements which may add resolution and range to the system, as well as redundancy and noise averaging.

Fig. 6 illustrates an apparatus 600 for determining the orientation and/or position of an optical waveguide which comprises the PISC 100 of Fig. 5. The apparatus 600 is manufactured as a photonic integrated circuit and comprises the sensor array 500 having at least two input couplers 104, an optical interferometric detection circuit 602 and electrical output ports 106. As known in the art, the photonic integrated circuit may comprise a substrate layer 604 and an oxide layer 606. As illustrated, the input couplers 104 may be implemented as surface-coupled (SC), i.e., on the on the top surface 608 of the circuit. In other embodiments, they may just as well be implemented as edge-coupled (EC), i.e., on the facet face 610 of the circuit. Both edge-coupled (EC) are surface-coupled (SC) are known in the art.

The input couplers 104 capture respective sample signals of the probe light signal propagating in free-space from the output of the optical waveguide 216 (not shown in Fig. 6) to the PISC. The interferometric detection circuit 602 is an optical circuit which receives the sample signals and performs optical processing to generate electrical detection signals representative of a relative intensity and a relative phase difference between each pair of sample signals as sampled by the input couplers 104. The electrical detection signals can be read via the electrical output ports 106, which may be implemented as either electrical couplers 106 (for probing via an electrical probe) or electrical contacts 108 (for wire connection).

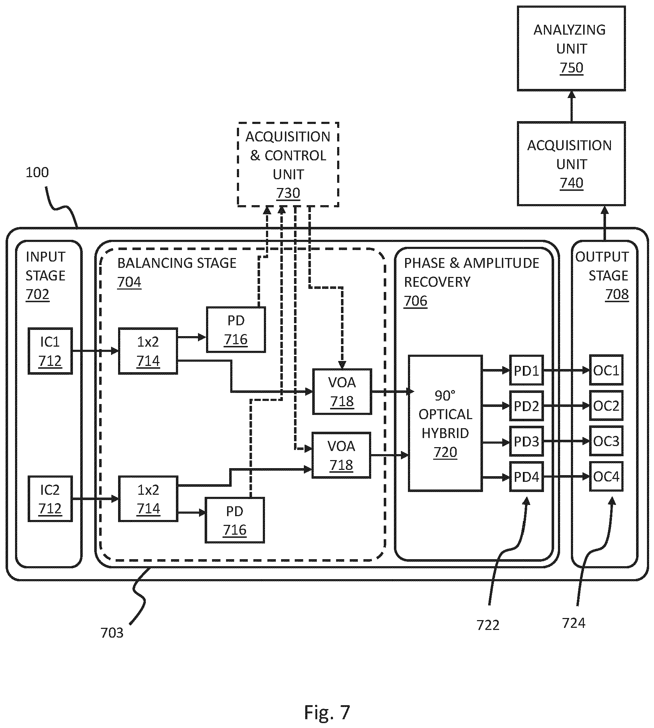

Fig. 7 illustrates the apparatus 600, in accordance with one example embodiment. The main purpose of the apparatus 600 is to measure variation in the phase and amplitude of an incoming light beam at different on-chip positions, which can then be used to determine the optical probe's orientation and/or position (mainly its distance). Fig. 7 shows the building blocks of a photonic circuit to measure the relative intensity and the relative phase difference between pairs of inputs couplers 712.

The apparatus of Fig. 7 comprises an input stage 702, an interferometric detection stage 703 comprising an optional balancing stage 704 and a phase/amplitude recovery stage 706, and an output stage 708.

The input stage 702 comprises at least two input couplers 712 which may be implemented as optical port I/O interfaces as known in the industry. Such interfaces are specialized for receiving and extracting optical signals to/from a PIC, but are herein used for capturing sample signals incident on the sensor array. The distance "d" (see dx and dy in Figs. 4 and 5) corresponds to the distance between the two input couplers IC1 and IC2. This distance defines the tradeoff between sensitivity, scaling and Signal to Noise Ratio (SNR) (as illustrated in Fig. 10) and constitutes an important design parameter that may be adjusted by design in order to tailor to diverse applications or phase difference resolutions and ranges. The two input couplers 712 each capture a sample of the probe light signal, which sample optical signals than propagate to the interferometric detection stage 703 for recovering the relative intensity and the relative phase difference between the two sample signals.

The interferometric detection stage 703 may comprise an optional balancing stage 704 wherein the sample signals may undergo power equilibrium via Variable Optical Attenuators (VOAs) 718. The balancing stage 704 comprises an arrangement of VOAs 718 and photodetectors (PDs) 716, as well as 1×2 optical couplers 714 to split each sample signal toward a corresponding VOA 718 and photodetector 716. The VOAs 718 are used to adjust the signal's intensity in order to balance (i.e., equalize) the signal power between the two input ports of the phase and amplitude recovery stage 706. Such balancing may be used to improve the accuracy of the relative phase difference measurements. The photodetectors PDs 716 are responsible for converting optical signals into electrical signals to check and make sure about the equalized power. The electrical signals generated by the PDs 716 are output from the PISC 100 and read by an optional acquisition and control unit 730 which controls the attenuation level of the VOAs as a function of the signals detected on the PDs 716. It is noted that in other implementations, the balancing stage 704 may be omitted all together or may comprise one or more optical delay line(s) or optical switch(es).

The phase & amplitude recovery stage 706 is where the optical interferometry comes into play. The phase & amplitude recovery stage 706 comprises an optical interferometric circuit 720 receiving the sample optical signals (as optionally balanced in the balancing stage 704) and generating a set of interference signals. In the embodiment of Fig. 7, the optical interferometric circuit is embodied as a 90° Optical Hybrid 720 and coherently combines the sample signals within the 90° Optical Hybrid 720. The 90° optical hybrid 720 is a complex optical component designed to combine two optical inputs. It then splits these combined inputs into four outputs. Importantly, it introduces a relative phase shift of 90° between the combined signals in its outputs. The hybrid 720 operates on the principle that when two coherent beams are combined, the interference pattern provides information on their phase relationship. By having a fixed 90° phase difference, it allows the circuit to discern both relative intensity and relative phase differences, which are wrapped in a $2\pi$ modulo due to the nature of the phase shift.

The resulting interference signals are detected by four photodetectors 722 (PD1, PD2, PD3, and PD4) to generate corresponding electrical detection signals which are representative of the relative intensity and relative phase differences between the sample signals of the probe light signal as coupled to the input couplers 712. The photodetectors 722 measure the various combined signals emanating from the 90° Optical Hybrid 720. The signals obtained from these photodetectors 722 provide intricate details about the relative phase difference and relative intensity between the sample signals entering the 90° Optical Hybrid 720.

It is noted that the optical path from the input ports IC1 to the first input of the phase and recovery module 720 and from the input port IC2 to the second input of the phase and recovery module 720 should be either phase-matched or known (e.g. by calibration). This phase matching condition can be obtained by design, or the phase difference can be mitigated through calibration.

The output stage 708 comprises four output couplers 714 (OC1, OC2, OC3, OC4) which are used to extract the electrical detection signals generated by the photodetectors 722, out of the PISC 100 to an acquisition unit 740 comprising an analog-to-digital converter to convert the electrical detection signals from analog to digital interference signals in order to allow processing by an analyzing unit 750 which comprises a processing unit receiving the digital interference signals and configured for determining the orientation and/or position of the optical waveguide from the acquired digital interference signals.

The PISC 100 efficiently captures the relative phase variations between sample signals entering through the input couplers 712 (IC1, IC2). By analyzing the relative signals at the photodetectors 722, one can deduce critical details about the positioning of the optical probe 114. This evaluation is particularly accurate within the Rayleigh range.

The relationship between the orientation and/or position of the optical waveguide 216 and the measured parameters of relative phase difference and/or relative intensity may be known, e.g., from either prior simulations or numerical calculations. In one embodiment, once the relationship is determined, it may be expressed in a Look-Up Table (LUT) to be later used to determine the orientation and/or position of the optical waveguide 216 as a function of the measured parameters. In other embodiments, it may be envisaged to replace the LUT by analytic expressions.

A standout characteristic of the PISC 100 of Fig. 7 is its potential for scalability into a larger matrix arrangement. The design can evolve into a comprehensive two-dimensional matrix of input couplers that covers both vertical and horizontal dimensions. This expansion enhances the system's ability to identify the orientation of the optical waveguide about both the x and y axes (Rx and Ry) by capturing the probe light signal, making it suitable for applications that require two-dimensional measurements.

The interferometric detection stage 703 and the output stage 708 may be scaled up to process multiple pairs of sample signals as captured from corresponding pairs of input couplers 712 within the matrix, adjacent or not, thereby creating multiples distances dx and dy over both the both vertical and horizontal dimensions.

The foundation of the PISC 100 is based on core photonic components such as input couplers, VOAs, a 90° optical hybrid and photodetectors. This structure possesses a modular nature, allowing for seamless adaptations and refinements.

Furthermore, the integration of the 90° optical hybrid with the photodetectors (PDs) in the phase & amplitude recovery stage enables precise interference analysis, pivotal for extracting accurate phase and amplitude data. As known in the art, on-chip optical hybrids are capable of achieving a phase error lower than 3 degrees (see Guan, Hang, et al. "Compact and low loss 90° optical hybrid on a silicon-on-insulator platform." Optics Express 25.23 (2017): 28957-28968). However, other implementations are envisaged. For example, in other embodiments, alternative optical interferometric configurations may be used for implementing the optical interferometric circuit, such as a multi-mode interferometer circuit or a Mach-Zehnder interferometer circuit.

An integral aspect of this design is the "d" parameter, indicating the distance between the two input couplers 712. This feature showcases the circuit's versatility. Adjusting this parameter enables the system to accommodate a wide range of phase measurement needs.

The present design effectively manages power levels. However, the embodiment of Fig. 7 is not limitative and other implementations may be envisaged. As advancements in photonics technology unfold, there is an opportunity to incorporate cutting-edge components for improved power management. Such advancements may be used to enhance accuracy in phase and amplitude measurements. Additionally, the circuit's current approach to polarization can undergo further refinement. Future versions may incorporate advanced components, leading to superior management of light wave directions. This refined control may ensure that optical signals remain consistent across various conditions.

The simulation results, coupled with the intricacies of our design, validate the potential of this photonics circuit array to determine the exact orientation of an optical probe.

As explained with reference to Fig. 3, one application of the PISC 100 is the positioning an optical probe 114 relative to a target PIC 102 to be tested. In such case, once the orientation and/or position of the optical probe 114 relative to the PISC 100 is determined, the optical probe 114 is moved to a target orientation and/or position relative to the target PIC as a function of the determined orientation and/or position, using one or more motion units 112, 120. In such case, the analyzing unit 750 may further be configured to calculate a displacement of the optical probe 114 toward to the target PIC 102 at least from the determined orientation and/or position of the optical probe 114 relative to the PISC 100 and a predetermined position and orientation of the PISC 100 relative to the target PIC 102. The optical probe 114 is then moved to a target orientation and/or position relative to the target PIC 102 according to the calculated displacement.

As explained herein above, in some embodiments, the PISC 100 and the PIC 102 may be part of a same die or a same wafer such that a position and orientation of the PIC 102 relative to the PISC 100 is known by design. In yet other embodiments, the PISC 100 may be manufactured on a separate die and may simply be mounted over the base stage in a fixed position and orientation relative to the PIC 102, the said position and orientation being either known by design or determined by measurement using, e.g., machine vision or other sensors.

Orientation and/or position measurement principle:

Any light source that exits from an optical waveguide, such as an optical fiber, will exhibit a non-linear wavefront at the output, normally significant within the Rayleigh range. The non-linearity of the wavefront is usable, e.g., in the form of a Look-Up Table (LUT), such that once resolved into phase and amplitude components along a line or plane, an orientation (single-angle if resolved along line, dual-angle if resolved along a plane) and a distance of the optical waveguide can be retrieved using such LUT (see, e.g., of Fig. 12). In addition, further information can be gained on top of the orientation and distance, such as the light-source position in the plane parallel to the line/surface onto which the phase and intensity are resolved.

For example, on a preliminary step (i.e., before using the technique for live positioning), a model of the wavefront of the probe light signal as propagating in free-space at the output of the optical waveguide 216 may be obtained, e.g., via simulations or numerical calculations. Fig. 8 and 9 illustrates the results of such simulations in the case of an SMF-28 optical fiber. The results of such simulations can be organized in the LUT referred to hereinabove to later interpret the sample signals captures by a sensor array 400, 500. The simulations and resulting LUT should account for physical dispositions of the input couplers on the sensor array 400, 500, including the relative spacing dx, dy from one another. Of course, it should also account for the characteristics of the optical waveguide 216. It was found that for a given subset of orientation angles and distances, there corresponds unique relative phase difference(s) between the input couplers of the sensor array 400, 500.

Then, the LUT can be used to retrieve an orientation and/or position of the optical waveguide 216 relative to the sensor array 400, 500. In one embodiment, when positioning the optical waveguide 216, it is first brought in proximity to the PISC 100 and using an active alignment may be performed to center the beam intensity onto the sensor array 400, 500, either in one dimension if a line of detectors is used, or in two dimensions if input couplers are disposed in a 2D matrix. Second, using the PISC 100, the relative phase difference may be measured between each pair of input couplers forming the sensor array 400, 500. For instance, if the sensor array 500 comprises three input couplers, then three relative phase differences are obtained, i.e. $\theta_{1-2}$, $\theta_{1-3}$ and $\theta_{2-3}$, respectively for pairs 1-2, 1-3 and 2-3.

Then, using the LUT, the live readings of the optical interferometric circuit of the PISC 100 are compared to values in the LUT to retrieve the angle of incidence of the beam and/or the distance of its origine, and thereby determine the orientation and/or position of the optical waveguide 216.

In one implementation, this method provides the capacity to deterministically position an optical probe 114 precisely with respect to a reference circuit, i.e., the PISC 100, and then precisely position the optical probe 114 with respect to a target PIC 102 to be tested, assuming the position and orientation of the reference circuit relative to the target PIC is known by design or prior measurement. It provides the capacity to automatically, precisely and repeatably position an optical probe 114, and thereby repeatability and stability in the PIC testing.

Simulations:

Simulations were conducted to validate and quantify the approach. The results show that the wavefront of the propagated beam exhibits a phase and intensity response at the location of the chip, which is function of the orientation of the optical probe with a high sensitivity. In fact, within the Rayleigh range, the wavefront of an optical source is generally highly non-linear. Thus, the results show that known near-field non-linearities can be leveraged and ultimately translated into position and orientation of the optical waveguide relative to the sensing array.

The PISC 100 can be used to measure the phase and intensity at multiple locations on the chip. The relative phase difference (in-between input couplers) can be measured to sample the phase and intensity wavefront over an area where enough optical signal is present. From this information, the orientation and/or distance of the optical probe can be calculated based on expected function found by the simulations (e.g., via a LUT). The simulations also confirm that the design parameters (e.g., the distance between the on-chip input couplers) required to measure and resolve the phase difference are within acceptable order of magnitude to be manufacturable. In fact, the distance and more generally, the configuration of the sensor array enables the tuning of the sensitivity and scaling (i.e., range) of the apparatus.

In the realm of optical testing for PICs, single-mode fibers (SMFs) are a common choice for delivering light and have been selected as the optical waveguide 216 used for simulations (any other optical waveguide could be considered as well). These fibers support the fundamental mode, which emerges with a transverse Gaussian intensity profile. This profile can be accurately described using Gaussian beam propagation equations. In short, it means that the electric field amplitude of the light wave, in the plane perpendicular to its propagation direction, follows a Gaussian curve. This curve is bell-shaped and decreases exponentially from its highest point at the center. These equations are mathematical tools that detail how various beam parameters, like spot size, divergence angle, and wavefront curvature, change along the beam's axis. They also allow for the calculation of the beam's intensity and phase information. These equations are rooted in the paraxial approximation, assuming that the beam angle is sufficiently small to disregard the transverse components of the wave vector and phase (see B. E. A. Saleh and M. C. Teich, Fundamentals of Photonics. New York, NY, USA: Wiley, 2007).

As light traverses through the fiber, the Gaussian beam remains confined within the core, maintaining its modal field distribution. The core of a single-mode fiber boasts a small diameter (typically ranging from 8 to 10.5 $\mu$m) and a slightly higher refractive index than the cladding. This discrepancy creates a waveguide that exclusively supports one transverse mode of light, known as the fundamental or LP01 mode. This mode exhibits a symmetric intensity profile that aligns with the Gaussian function. The single-mode condition ensures the absence of interference or dispersion from other modes, preserving the quality and coherence of the light signal (see G. Keiser, Optical Fiber Communications, 4th ed. New York, NY, USA: McGraw-Hill, 2008).

The Gaussian beam theory provides an effective framework for analyzing critical beam parameters such as spot size, divergence, Rayleigh range, and waist location for the output of single-mode fibers. By utilizing Gaussian beam propagation equations, one can calculate how these parameters change along the beam's axis and how they rely on factors like wavelength and the initial beam waist. For instance, the spot size is defined as the radius where the intensity drops to 1/e2 (approximately 13.5%) of its peak value, and it increases linearly with distance from the waist. The divergence angle is inversely proportional to the waist size and signifies how rapidly the beam spreads out. The Rayleigh range marks the distance from the waist where the spot size becomes $\sqrt{2}$ times larger than at the waist, signifying how far the beam can propagate before significant divergence occurs. The waist location designates where the spot size reaches its minimum value and can be manipulated using lenses or other optical components (D. L. Shealy and J. A. Hoffnagle, "Laser beam shaping profiles and propagation," Applied Optics, vol. 45, no. 21, pp. 5118-5131, 2006).

In essence, the journey begins with Maxwell's equations, fundamental in describing electromagnetic wave propagation and foundational in the analysis of optical systems (see M. Born and E. Wolf, Principles of Optics: Electromagnetic Theory of Propagation, Interference and Diffraction of Light, 7th ed. Cambridge, UK: Cambridge University Press, 1999). These equations lead to the wave equation, which, when suitably approximated, simplifies into the Helmholtz equation, governing monochromatic wave propagation. Applying the paraxial approximation to the Helmholtz equation yields the paraxial Helmholtz equation, which can be analytically solved. This equation accommodates Gaussian beam solutions, offering the mathematical framework for Gaussian beams and their propagation characteristics (see L. C. Andrews and R. L. Phillips, Laser Beam Propagation through Random Media, 2nd ed. Bellingham, WA, USA: SPIE Press, 2005).

The Gaussian beam equation can be expressed in both Cartesian coordinates and spherical coordinate, as shown in Equation 1 and in Equation 2, respectively:

$$E(x, y, z, t) = E_0 (\frac{w_0}{w(z)}) e^{(-\frac{x^2+y^2}{w^2(z)})} e^{i(kz-\omega t)} e^{ik(\frac{x^2+y^2}{2R(z)})} \qquad \text{Equation 1}$$

$$U(r) = A_0 (\frac{w_0}{w(z)}) e^{[-\frac{\rho^2}{w^2(z)}]} e^{-i[kz-tan^{-1}(\frac{z}{z_0})]} e^{-i[\frac{k\rho^2}{2R(z)}]} \qquad \text{Equation 2}$$

wherein $\rho = \sqrt{x^2 + y^2}$ and $A_0$ is constant.

- $E(x,y,z,t)$ represents the electric field amplitude in Cartesian coordinates at position (x, y, z) and time t.
- $E_0$ denotes the initial amplitude of the electric field.
- $w_0$ signifies the initial beam waist radius at its narrowest point.
- $w(z)$ is the beam radius at position z.
- $x$ and $y$ are spatial coordinates in the transverse plane.
- $z$ stands for the axial coordinate.
- $k$ represents the wave number.
- $\omega$ is the angular frequency.
- $R(z)$ signifies the radius of curvature of the wavefront at position z.
- $U(r)$ represents the electric field amplitude in spherical coordinates at radial distance rr from the optical axis.
- $\rho$ is the radial coordinate in the transverse plane in spherical coordinates.
- $z_0$ denotes the Rayleigh range.

The Gaussian beam equations consist of various factors, including amplitude, longitudinal phase, and radial phase components, each contributing to the overall description of the beam's behavior. These components can be independently defined and analyzed to gain a comprehensive understanding of Gaussian beams in optical systems.

The beam parameters such as beam width, wavefront radius of curvature, initial beam radius, Gouy phase, and wavenumber can be expressed as follows (see Y. Yang et al., "Crosstalk reduction of integrated optical waveguides with nonuniform subwavelength silicon strips," Sci. Rep., vol. 10, no. 1, Art. no. 4491, 2020).

| | | |
|---|---|---|
| Beam width | $w(z) = w_0 \sqrt{1 + (\frac{z}{z_0})^2}$ | Equation 3 |
| Wavefront radius of curvature | $R(z) = z[1 + (\frac{z}{z_0})^2]$ | Equation 4 |
| Initial beam radius | $w_0 = \sqrt{\frac{\lambda z_0}{\pi}}$ | Equation 5 |
| Gouy phase | $tan^{-1} [\frac{z}{z_0}]$ | Equation 6 |
| Wavenumber | $k = \frac{2\pi}{\lambda}$ | Equation 7 |

It is herein assumed that the optical fiber used in the automated PIC testing station is the Corning SMF-28, which is specifically designed for single-mode applications. Here are some key properties of this fiber:

- Core Diameter: The core diameter of Corning SMF-28 is typically around 8.2 micrometers ($\mu$m). This dimension

represents the central region of the fiber through which light is guided. Single-mode fibers like SMF-28 have a small core diameter to support only the fundamental mode of light propagation.

- Cladding Diameter: Surrounding the core is the cladding, which prevents light from escaping the core. For SMF-28, the cladding diameter is typically 125 $\mu$m. The cladding serves as a protective layer and ensures that light remains confined within the core.
- Numerical Aperture (NA): The Numerical Aperture is a critical parameter that defines the range of angles at which the fiber can accept or emit light effectively. For Corning SMF-28, the NA is typically around 0.14. A lower NA indicates that the fiber accepts light over a narrower range of angles, making it suitable for single-mode operation.
- Mode Field Diameter (MFD): The Mode Field Diameter is a measure of the effective diameter of the fiber, representing the region where most of the guided light is contained. In the case of SMF-28, the MFD is typically around 9.2 $\mu$m at 1310 nm and 10.4 $\mu$m at 1550 nm. The MFD provides insights into the beam's spatial characteristics and how it interacts with optical components.

To effectively model light emerging from the SMF and propagating towards the chip, and to apply the Gaussian beam equation to this model, the system was simplified by dividing it into two components: the light source, represented by the SMF used in our fiber arrays, and the plane, symbolizing the PIC.

In this simplified setup, the system's origin is defined at (X, Y, Z) = (0, 0, 0), corresponding to the SMF's output point. The light beam travels along the Z-axis, and the plane is situated precisely along the beam's propagation path. With this simplified configuration in place, we can easily apply the Gaussian beam equation to accurately describe how the light behaves in this context.

Simulation Concept for Different Tilt Angles and Positions:

Referring to Fig. 4, in an automated PIC testing setup, the optical probe may be mounted on a motorized motion unit 120 having six degrees of freedom, allowing for translation in the x, u, and z axes, as well as rotation around the 3 axes. However, precise knowledge of the z'-distance between the fiber end and the input coupler 104 on the wafer/die, as well as the incident angle of the optical probe 114 is not exactly known. The motorized control system for the optical probes facilitates both translation and rotation of the probe. Specifically, rotations Rx, Ry about the x and y axes. Rotation Rz' about the z' axis has no effect on coupling due to the circular and symmetric nature of the beam spot in the case of an ideal coupling. On the other hand, rotations Rx, Ry about the x and y axes influence coupling efficiency. Rx impacts the incident angle for input couplers disposed along the y-axis, while Ry impacts the incident angle for input couplers input couplers along the x-axis.

The simulations focus on the effects of the optical probe's different incident angles and the z'-distance between the optical probe and input couplers. As illustrated in Fig. 5, a single-mode fiber is positioned along the z-axis, pointing to the midpoint of the 2D plane where the sensor array 500 is disposed and located at a specified distance z' from the optical fiber's end. The simulation emulates the probe's key parameters, particularly its incident angles Rx, Ry and z'-distance.

The simulation tilts the plane around a central pivot while maintaining a trajectory parallel to the x-axis. This mirrors adjusting the probe's tip without disturbing the fiber-probe alignment. Despite the tilt, the beam remains focused on a single wafer point, ensuring stability.

To analyze the influence of positional changes in the optical probe, particularly the alterations in relative phase difference and relative intensity of the probe light signal, a simulation was developed. In this simulation, a single-mode fiber laser, serving as the light source, is positioned along the z-axis, serving as the focal point of a global coordinate system. A two-dimensional (2D) plane is strategically located at a defined distance (z) from the fiber's output, with its midpoint precisely aligned with the z-axis as illustrated in Fig. 4. Across various z-distances, the simulation calculates the changes in intensity and phase distribution across the plane.

Simulations were used to gain a clear understanding of how changes in the position and incident angle of the optical probe impact the phase and intensity. For example, it is envisaged to align multiple input couplers on the PISC 100, while maintaining a consistent distance between the input couplers in the order of magnitude of 10 to 50 $\mu$m. A smaller distance would require to have crosstalk mitigation strategies in between the adjacent waveguides. Although possible, it requires more advanced design and complex simulations. Too large a distance and the optical power will be too low to detect for all on-chip input signals with on-chip photodetectors.

Such simulations may also be used to build the LUT referred to hereinabove in order to retrieve the orientation and/or position of the optical probe from the measured relative intensities and relative phase differences.

Fig. 8 presents the variations in phase and intensity along x = 0. Using the starting point of this line as a reference, Figs. 8 a) and 8 c) highlight the relative changes in phase and intensity across varying input coupler positions. Notably, even minute positional deviations-on the order of sub-micrometers-induce discernible shifts in both parameters. This sensitivity underscores the imperative for precise optical probe positioning within the system.

In Fig. 8 a), the phase difference along the x = 0 line is shown. This figure provides insight by calculating the phase at each data point and comparing it to the reference value at (x, y = 0, 25), which is defined as the starting point. This allows to understand how the phase varies across different points. It shows that a photonics circuit array can effectively detect the optical probe's position (mainly orientation and distance) using these phase measurements.

Fig. 8 b) presents this information differently. It uses a bar plot to show the relative phase difference between the starting point (x, y = 0, 25 $\mu$m) and the end point (x, y = 0, -25 $\mu$m). This offers another view of how the relative phase difference would change for a distance dy = 50 $\mu$m.

Moving on to intensity, Figs. 8 c) and 8 d) highlight the intensity differences. These graphs show that using intensity measurements from a photonics circuit array represent a reliable parameter to determine the optical probe's position.

Fig. 8 b) helps understand the system's sensitivity. The relative phase difference, when related to tilt angle, is found to be around 70 rad per 20°. This means there is a 200° phase change for every degree change in the probe's position. With a system's ability to detect phase changes as small as about 3°, this implies a very high resolution in detecting the optical probe's position, i.e., around 0.015°.

Using a photonics circuit array to combine both angular and positional data provides a highly accurate method for detecting the optical probe's position. This method is more precise than other methods currently available.

The proposed photonic integrated circuit array can determine the optical probe's position by comparing relative phase differences between input ports, rather than relying on absolute phase values. This is because the initial unmodified phase and intensity at the fiber output cannot be directly measured. Additionally, as the light propagates from the fiber to the chip, environmental factors such as temperature drifts or mechanical vibrations may alter the absolute phase and intensity. Using the absolute values would require precise knowledge of the original state and stability during propagation, which are unrealistic assumptions. However, looking at relative phase differences between input couplers on the chip removes certain dependencies on the unknown starting state and environmental fluctuations during propagation. This is because variables like temperature changes could potentially induce similar phase shifts at all input couplers, and thus may not significantly affect the relative phase relationships. By analyzing phase variation trends across the different input couplers, the circuit can deduce the probe orientation and/or position based solely on the relative differences, without needing the absolute values.

Fig. 9 presents simulation results, offering insights into how phases differ for input coupler with various spacings dy. The implementation of a 90° optical hybrid in the optical system motivates the concept of a wrapped phase. Phase differences in optical systems can occasionally exceed the usual 0 to $2\pi$ range. The modulo $2\pi$ operation curtails these phase values between 0 and $2\pi$, providing a coherent perspective. This wrapped phase measurement becomes invaluable in sampling the phase and intensity wavefront, particularly over areas abundant in optical signal.

Fig. 9 shows the relative phase differences for varying tilt angles as measured with an array of three input couplers in accordance with two example distance values between the input couplers, i.e., 4 $\mu$m and 10 $\mu$m.

Figs. 9 a) and 9 c) illustrate the positions of the input couplers which are placed with 10 $\mu$m and 4 $\mu$m spacings on a 50 $\mu$m by 50 $\mu$m plane, respectively. Fig. 9 b) shows relative phase difference readings from these input couplers and for different tilt angles. Finally, Fig. 9 d) shows the relative phase differences (wrapped with modulo 2 $\pi$) between input couplers that are placed with 10 $\mu$m and 4 $\mu$m spacings.

For a spacing of 4 $\mu$m, the phase difference between couplers 1-2 maintain a phase difference that lies consistently above that of couplers 1-3 throughout all tilt angles. There is a clear linear relationship between the tilt angle and the phase difference. This direct linearity allows for easy and predictable interpretation, advantageous for applications requiring straightforward phase difference monitoring. The consistent gap between the two lines indicates a uniform phase variation between pairs of input couplers, further simplifying analysis.

For a spacing of 10 $\mu$m, the phase difference for couplers 1-2 and ports 1-3 adopts an oscillatory trend against the tilt angle due to modulo $2\pi$ wrapping, creating cyclic variations. Noteworthy are the intersections between the two lines. The oscillations exhibited by the 10 $\mu$m spacing introduce intricate patterns, potentially offering higher resolution and sensitivity to smaller tilt angle modifications. While this may require a nuanced approach to interpretation, it may be valuable in scenarios demanding high precision.

The 4-$\mu$m spacing provides a predictable phase difference trend over a large range of position, beneficial for applications that value simplicity and clarity. Conversely, the 10-$\mu$m spacing delivers precise measurements, especially valuable when detecting minute tilt angle changes. Harnessing both spacings offers versatility, allowing the system to cater to both a large range (via a smaller, here 4 $\mu$m, spacing) and a high resolution (via a larger, here 10 $\mu$m, spacing). By using multiple spacings, one can achieve a balanced design that incorporates both the broad range interpretation and the sensitivity. This synergy may lead to designs that cater to a wider array of applications and scenarios.

In essence, the tandem application of both spacings can lead to enhanced results, capturing the benefits of each spacing and thus elevating the precision and versatility of optical probe positioning.

Fig. 10 shows how the distance in z and tilt angles impact the relative phase differences in input couplers spaced of 10 $\mu$m and 4 $\mu$m. These differences are shown using color-coded heatmaps. The colors in the heatmaps represent the relative (wrapped $2\pi$ modulo) phase differences.

Looking closely, it can be seen that as we move across a different z'-distance, the phase differences change. This tells us that the distance plays a big role in these differences. Tilt angle also affects the phase differences, as seen by the changing colors up and down the heatmap. When comparing the wider 10 μm spacing to the narrower 4 μm spacing, the tighter spacing shows clearer differences in phase.

The simulations validate the efficacy of the proposed on-chip photonic circuit array as a precision instrument for probe positioning. The combination of highly sensitive, responsive phase data and stable intensity baselines provides ingredients for accurate and repeatable measurement. It shows that the herein proposed methods and apparatuses enable precise optical probe position and orientation detection through phase and intensity measurements on a PIC.

Example of computer system architecture

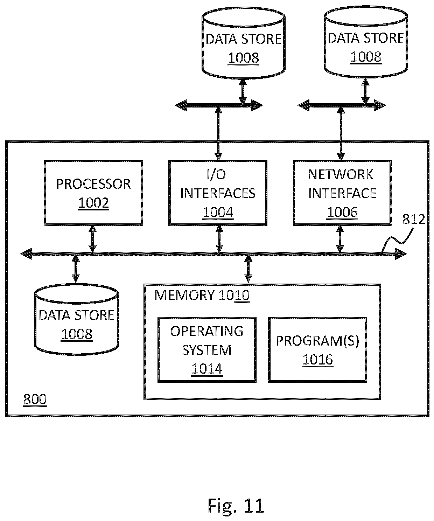

Much of the software application that is used to implement the herein-described methods resides on and runs on a computer system, which in one embodiment, is a personal computer, workstation, or server. Fig. 11 is a block diagram of a computer system 1000 which may embody, e.g., the control and analyzing unit 128 used in test station of Figs. 1 and 3. In terms of hardware architecture, the computer system 1000 generally includes a processor 1002, input/output (I/O) interfaces 1004, a network interface 1006, a data store 1008, and memory 1010. It should be appreciated by those of ordinary skill in the art that Fig. 11 depicts the computer system 1000 in a simplified manner, and a practical embodiment may include additional components and suitably configured processing logic to support known or conventional operating features that are not described in detail herein. A local interface 1012 interconnects the major components. The local interface 1012 may be, for example, but not limited to, one or more buses or other wired or wireless connections, as is known in the art. The local interface 1012 may have additional elements, which are omitted for simplicity, such as controllers, buffers (caches), drivers, repeaters, and receivers, among many others, to enable communications. Further, the local interface 1012 may include address, control, and/or data connections to enable appropriate communications among the aforementioned components.

The computer system 1000 is controlled by the processor 1002, which serves as the central processing unit (CPU) for the system. The processor 1002 is a hardware device for executing software instructions. The processor 1002 may comprise one or more processors, including central processing unit(s) (CPU), auxiliary processor(s) or generally any device for executing software instructions. When the computer system 1000 is in operation, the processor 1002 is configured to execute software stored within the memory 1010, to communicate data to and from the memory 1010, and to generally control operations of the computer system 1000 pursuant to the software instructions. The I/O interfaces 1004 may be used to receive user input from and/or for providing system output to one or more devices or components. The user input may be provided via, for example, a keyboard, touchpad, and/or a mouse. System output may be provided via a display device and a printer (not shown). I/O interfaces 804 may include, for example, a serial port, a parallel port, a Small Computer System Interface (SCSI), a Serial ATA (SATA), a fibre channel, Infiniband, iSCSI, a PCI Express interface (PCI-x), an Infrared (IR) interface, a Radio Frequency (RF) interface, a Universal Serial Bus (USB) interface, or the like.

The network interface 1006 may be used to enable the computer system 1000 to communicate over a computer network or the Internet. The network interface 1006 may include, for example, an Ethernet card or adapter or a Wireless Local Area Network (WLAN) card or adapter. The network interface 1006 may include address, control, and/or data connections to enable appropriate communications on the network. A data store 1008 may be used to store data. The data store 1008 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 808 may incorporate electronic, magnetic, optical, and/or other types of storage media. In one example, the data store 808 may be located internal to the computer system 1000 such as, for example, an internal hard drive connected to the local interface 1012 in the computer system 1000. Additionally, in another embodiment, the data store 1008 may be located external to the computer system 1000 such as, for example, an external hard drive connected to the I/O interfaces 1004 (e.g., SCSI or USB connection). In a further embodiment, the data store 1008 may be connected to the computer system 1000 through a network, such as, for example, a network attached file server.

The memory 1010 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 1010 may incorporate electronic, magnetic, optical, and/or other types of storage media. Note that the memory 1010 may have a distributed architecture, where various components are situated remotely from one another, but can be accessed by the processor 1002. The software in memory 1010 may include one or more computer programs, each of which includes an ordered listing of executable instructions for implementing logical functions. The software in the memory 1010 includes a suitable operating system (O/S) 1014 and one or more computer programs 1016. The operating system 1014 controls the execution of other computer programs, such as the one or more programs 1016, and provides scheduling, input-output control, file and data management, memory management, and communication control and related services. The one or more programs 1016 may be configured to implement the various processes, algorithms, methods, techniques, etc. described herein, such as duplicate OTDR measurement detection.

It should be noted that the architecture of the computer system as shown in Fig. 11 is meant as an illustrative example only. Numerous types of computer systems are available and can be used to implement the computer system.

The embodiments described above are intended to be exemplary only and one skilled in the art will recognize that numerous modifications can be made to these embodiments without departing from the scope of the invention. For example, in other embodiments, alternative optical interferometric configurations may be used for implementing the optical interferometric circuit, such as a multi-mode interferometer circuit or a Mach-Zehnder interferometer circuit.

Although the present disclosure has been illustrated and described herein with reference to specific embodiments and examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following claims.

**Claims**

1. An apparatus for determining an orientation of an optical waveguide carrying a probe light signal, relative to a target photonic integrated circuit, the apparatus comprising:
   a photonic integrated sensor circuit comprising:

   a sensor array comprising a first optical input coupler and a second optical input coupler to capture respective first sample signal and second sample signal of said probe light signal propagating in free-space from an output of said optical waveguide to said first and second optical input couplers, and
   a first optical interferometric circuit receiving said first and second sample signals of the probe light signal and generating a first set of interference signals; and
   a first set of photodetectors receiving said first set of interference signals to generate electrical detection signals representative of: a) a relative intensity between said first and said second sample signals of the probe light signal as coupled to the first and second optical input couplers; and b) a relative phase difference between said first and said second sample signals of the probe light signal as sampled by the first and second optical input couplers.

2. The apparatus as claimed in claim 1,

   wherein said first and second optical input coupler are positioned spaced apart from one another along a first axis; and
   wherein said a sensor array further comprises a third optical input coupler to capture a third sample signal of said probe light signal and positioned spaced apart from said second optical input coupler along a second axis perpendicular to said first axis.

3. The apparatus as claimed in claim 2, wherein said photonic integrated sensor circuit further comprises:

   a second optical interferometric circuit receiving said second and third sample signals and generating a second set of interference signals; and
   a second set of photodetectors receiving said second set of interference signals to generate electrical detection signals representative of: a) a third intensity of the probe light signal as coupled to the third optical input coupler of the photonic integrated sensor circuit; and b) a phase difference of the probe light signal as sampled by the second and third optical input couplers of the photonic integrated sensor circuit.

4. The apparatus as claimed in any one of claims 1 to 3, wherein the first optical interferometric circuit comprises a 90-degree optical hybrid circuit.

5. The apparatus as claimed in claim 4, wherein a first set of photodetectors comprises four photodetectors receiving respective four interference signals from the 90-degree optical hybrid circuit.

6. The apparatus as claimed in claim 2 or 3, wherein said a sensor array comprises a two-dimensional matrix of optical input couplers comprising said first, second and third optical input couplers.

7. The apparatus as claimed in claim 6, wherein said photonic integrated sensor circuit comprises a plurality of optical interferometric circuits generating respective sets of interference signals from said matrix of optical input couplers;

and a corresponding plurality of sets of photodetectors receiving said sets of interference signals to generate electrical detection signals.

8. The apparatus as claimed in any one of claims 1 to 7, further comprising:

   an analog-to-digital converter to convert the electrical detection signals from analog to digital interference signals in order to allow processing; and
   a processing unit receiving the digital interference signals and configured for determining said orientation of the optical waveguide about a rotation axis from said digital interference signals.

9. The apparatus as claimed in claim 8, wherein said processing unit is further configured for determining a distance of the optical waveguide relative to the photonic integrated sensor circuit using measured relative intensity and relative phase difference.

10. The apparatus as claimed in any one of claims 1 to 9, wherein said optical waveguide is part of an optical probe for testing said target photonic integrated circuit.

11. The apparatus as claimed in claim 11, wherein said photonic integrated sensor circuit and said target photonic integrated circuit are part of a same wafer, a position and orientation of the target photonic integrated circuit relative to the photonic integrated sensor circuit being known by design.

12. A method for determining an orientation of an optical waveguide carrying a probe light signal, relative to a photonic integrated circuit, the method comprising:
    positioning the optical waveguide in proximity to a photonic integrated sensor circuit comprising:

    a sensor array comprising a first optical input coupler and a second optical input coupler to capture respective first sample signal and second sample signal of said probe light signal propagating in free-space from an output of said optical waveguide to said first and second optical input couplers, and
    a first optical interferometric detection circuit receiving said first and second sample signals of the probe light signal and generating electrical detection signals representative of a relative intensity and a relative phase difference between said first and said second sample signals of the probe light signal as sampled by the first and second optical input couplers;
    using the photonic integrated sensor circuit, measuring a relative phase difference of the probe light signal as sampled by the first and second optical input couplers of the photonic integrated sensor circuit; and
    determining said orientation of the optical waveguide about a first axis from the measured relative phase difference.

13. The method as claimed in claim 12, wherein said first and second optical input coupler are positioned spaced apart from one another along a second axis perpendicular to said first axis; wherein said a sensor array further comprising a third optical input coupler positioned spaced apart from said second optical input coupler along said first axis to capture a third sample signal of said probe light signal, and wherein said method further comprises:

    using the photonic integrated sensor circuit, measuring a relative phase difference between said second and said third sample signals of the probe light signal as sampled by the second and third optical input couplers of the photonic integrated sensor circuit; and
    determining an orientation of the optical waveguide about said second axis using the measured relative phase difference between said second and said third sample signals.

14. The method as claimed in claim 12 or 13, further comprising:

    using the photonic integrated sensor circuit, measuring a relative intensity between said first and said second sample signals of the probe light signal as coupled to the first and second optical input couplers; and
    positioning the optical waveguide in proximity to a photonic integrated sensor circuit such that a propagation axis of the optical waveguide is substantially aligned to a point of origin defined on said sensor array using feedback from the measured relative intensity between said first and said second sample signals.

15. The method as claimed in any one of claims 12 to 14, further comprising determining a distance of the optical waveguide relative to the photonic integrated sensor circuit using the measured relative intensity and relative phase

difference.

Fig. 1 (Prior art)

Fig. 2

Fig. 3

Fig. 4

Fig. 5

106

100

104

500

608

INTERFEROMETRIC
DETECTION CIRCUIT
602

600

606

604

610

Fig. 6

Fig. 7

Fig. 8A

Fig. 8B

Fig. 8C

Fig. 8D

Measurement points with 10 µm spacing on a 50 by 50 µm plane

Fig. 9A

Phase values at points

Fig. 9B

Measurement points with 4 µm spacing
on a 50 by 50 µm plane

Fig. 9C

Relative phase difference

Fig. 9D

Relative phase difference (1-2) with
10 um spacing

Fig. 10A

Relative phase difference (1-3) with
10 um spacing

Fig. 10B

Relative phase difference (1-2) with
4 um spacing

Fig. 10C

Relative phase difference (1-3) with
4 um spacing

Fig. 10D

Fig. 11

**EP 4 575 446 A1**

## EUROPEAN SEARCH REPORT

**Application Number**

EP 24 22 2501

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIEGFRIED JANZ ET AL: "Optical wavefront phase-tilt measurement using Si-photonic waveguide grating couplers", ARXIV.ORG, CORNELL UNIVERSITY LIBRARY, 201 OLIN LIBRARY CORNELL UNIVERSITY ITHACA, NY 14853, 20 September 2023 (2023-09-20), XP091618864, * abstract; figures 1a,1b,1c * * page 1, column 2 * * page 2, column 2 * * first paragraph; page 3, column 2 * * last 2 paragraphs; page 4, column 1 * | 1-15 | INV. G01M11/00 G01B9/02055 G01B9/10 G02B6/30 G02B6/42 G02B27/62 G02F1/29 G01B11/27 G02F1/21 |
| A | US 7 024 066 B1 (MALENDEVICH ROMAN [US] ET AL) 4 April 2006 (2006-04-04) * the whole document * | 1-15 | |

----

**TECHNICAL FIELDS SEARCHED (IPC)**

G01M
G02F
G01B
G02B

The present search report has been drawn up for all claims

| Place of search | Date of completion of the search | Examiner |
|---|---|---|
| The Hague | 8 May 2025 | Nelva-Pasqual, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

33

# ANNEX TO THE EUROPEAN SEARCH REPORT
## ON EUROPEAN PATENT APPLICATION NO.

EP 24 22 2501

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | Publication date | Patent family member(s) | Publication date |
|---|---|---|---|
| US 7024066 B1 | 04-04-2006 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LATKOWSKI et al.** Open standards for automation of testing of photonic integrated circuits. *IEEE Journal of Selected Topics in Quantum Electronics*, 2019, vol. 25 (5), 1-8
- **GUAN** ; **HANG et al.** Compact and low loss 90° optical hybrid on a silicon-on-insulator platform. *Optics Express*, 2017, vol. 25 (23), 28957-28968
- **B. E. A. SALEH** ; **M. C. TEICH**. Fundamentals of Photonics. Wiley, 2007
- **G. KEISER**. Optical Fiber Communications. McGraw-Hill, 2008
- **D. L. SHEALY** ; **J. A. HOFFNAGLE**. Laser beam shaping profiles and propagation. *Applied Optics*, 2006, vol. 45 (21), 5118-5131
- **M. BORN** ; **E. WOLF**. Principles of Optics: Electromagnetic Theory of Propagation, Interference and Diffraction of Light. Cambridge University Press, 1999
- **L. C. ANDREWS** ; **R. L. PHILLIPS**. Laser Beam Propagation through Random Media. SPIE Press, 2005
- **Y. YANG et al.** Crosstalk reduction of integrated optical waveguides with nonuniform subwavelength silicon strips. *Sci. Rep.*, 2020, vol. 10 (1)